# EUROPEAN PATENT APPLICATION

(11) **EP 4 712 434 A1**
(43) Date of publication of application: **18.03.2026**
(21) Application number: 24829755.8
(22) Date of filing: 19.01.2024
(51) Int. Cl.: H04L 47/2483

(54) **NETWORK TRAFFIC SERVICE-TYPE DETERMINATION METHOD, ELECTRONIC DEVICE, AND READABLE STORAGE MEDIUM**

(30) Priority: 26.06.2023 CN 202310767550
(71) Applicant: ZTE CORPORATION, Shenzhen, Guangdong 518057 (CN)
(72) Inventor: SONG, Ke, Shenzhen, Guangdong 518057 (CN); LI, Huaguang, Shenzhen, Guangdong 518057 (CN); LUO, Xujian, Shenzhen, Guangdong 518057 (CN); WANG, Xiuzhong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/073319
(87) International publication number: WO 2025/001092

(57) **Abstract**

The present application provides a method for determining a service type of network traffic, an electronic device, and a readable storage medium. The method includes following steps: acquiring the QUIC migration flow, and determining a first identification feature corresponding to the QUIC migration flow; matching and acquiring a negotiation service type corresponding to the first identification feature from a metadata object, the metadata object being generated based on a second identification feature and the negotiation service type matching the QUIC negotiation flow corresponding to the QUIC migration flow; and configuring the negotiation service type as a migration service type corresponding to the QUIC migration flow.

## Description

### CROSS-REFERENCE TO RELATED APPLICATIONS

This application claims priority to Chinese Patent Application No. 202310767550.5, filed with the State Intellectual Property Office of China on June 26, 2023, the entire disclosure of which is incorporated herein by reference.

### TECHNICAL FIELD

The present application relates to the technical field of communications, and in particular to a method for determining a service type of network traffic, an electronic device, and a readable storage medium.

### BACKGROUND

Most internet services are carried over through the hypertext transfer protocol (HTTP). With the updates and iterations of HTTP, connection migration has been introduced into the underlying protocol of quick user datagram protocol internet connections (QUIC) of HTTP/3. HTTP network traffic includes the QUIC negotiation flow during the negotiation stage between the terminal device and the server before connection migration, and the QUIC migration flow after connection migration. It should be noted that detecting and accurately identifying the service type of HTTP network traffic is one of the most crucial capabilities of a deep packet inspection (DPI) system. Through this service type, operators can perform traffic accounting, quality of service (QoS) assurance, and generate service statistics reports.

In practical applications, service types include the negotiation service type before connection migration and the migration service type after connection migration. Before connection migration, the DPI system can determine the negotiation service type using the server name indication (SNI) in the ClientHello message within the QUIC negotiation flow. However, after connection migration, since no further negotiations will be held between the terminal device and the server, the DPI system cannot acquire SNI from the QUIC migration flow, making it impossible to determine the migration service type corresponding to the QUIC migration flow.

Therefore, in practical applications, a solution is needed that can accurately determine the migration service type corresponding to the QUIC migration flow after connection migration.

### SUMMARY

The main purpose of the present application is to provide a method for determining the service type of the network traffic, an electronic device, and a readable storage medium, to solve the problem that the migration service type corresponding to the QUIC migration flow cannot be determined after connection migration.

To achieve the above objectives, the present application provides a method for determining the service type of the network traffic. The method includes following steps: acquiring the QUIC migration flow, and determining a first identification feature corresponding to the QUIC migration flow; matching and acquiring a negotiation service type corresponding to the first identification feature from a metadata object, the metadata object being generated based on a second identification feature and the negotiation service type matching the QUIC negotiation flow corresponding to the QUIC migration flow; and configuring the negotiation service type as a migration service type corresponding to the QUIC migration flow.

In an embodiment, to achieve the above objectives, the present application further provides a method for determining a service type of network traffic, including: acquiring a QUIC negotiation flow; determining a second identification feature corresponding to the QUIC negotiation flow, and determining a negotiation service type corresponding to the QUIC negotiation flow; and generating a metadata object based on the second identification feature and the negotiation service type, the metadata object being configured to determine a migration service type matching the QUIC migration flow corresponding to the QUIC negotiation flow.

In an embodiment, to achieve the above objectives, the present application further provides an electronic device including: a memory, a processor, and a program for determining a service type of network traffic stored on the memory and executable on the processor. The program for determining the service type of the network traffic is configured to implement steps of the method for determining the service type of the network traffic as mentioned above.

In an embodiment, to achieve the above objectives, the present application further provides a computer-readable storage medium, storing a program for determining a service type of the network traffic. When the program for determining the service type of the network traffic is executed by a processor, steps of the method for determining the service type of the network traffic as mentioned above are implemented.

### BRIEF DESCRIPTION OF THE DRAWINGS

FIG. 1 is a schematic diagram showing the evolution of HTTP and QUIC according to an embodiment of the present application.
FIG. 2 is a flowchart of a method for determining a service type of network traffic according to a first embodiment of the present application.
FIG. 3 is a schematic diagram showing packet decoding of the method for determining the service type of the network traffic according to the first embodiment of the present application.
FIG. 4 is a flowchart showing the generation of a negotiation CID triplet object of the method for determining the service type of the network traffic according to the first embodiment of the present application.
FIG. 5 is a flowchart showing the generation of a negotiation quadruple object of the method for determining the service type of the network traffic according to the first embodiment of the present application.
FIG. 6 is a schematic diagram showing the composition of a packet message of the method for determining the service type of the network traffic according to the first embodiment of the present application.
FIG. 7 is a schematic diagram of the method for determining the service type of the network traffic according to a second embodiment of the present application.
FIG. 8 is a schematic diagram showing the identification process of three identification manners of the method for determining the service type of the network traffic according to the second embodiment of the present application.
FIG. 9 is a schematic diagram showing the connection migration process of the method for determining the service type of the network traffic in the non-cross-network migration scenario according to the second embodiment of the present application.
FIG. 10 is a flowchart showing the rapid association identification process of the method for determining the service type of the network traffic according to the second embodiment of the present application.
FIG. 11 is a schematic diagram showing the detection of migration CID in the uplink packet of the method for determining the service type of the network traffic according to the second embodiment of the present application.
FIG. 12 is a flowchart showing the strong association identification of the method for determining the service type of the network traffic according to the second embodiment of the present application.
FIG. 13 is a flowchart showing the weak association identification of the method for determining the service type of the network traffic according to the second embodiment of the present application.
FIG. 14 is a schematic diagram showing the results recorded in the negotiation network address triplet object of the method for determining the service type of the network traffic according to the second embodiment of the present application.
FIG. 15 is a schematic diagram showing the interaction between the DPI system and the external system in the method for determining the service type of the network traffic according to the second embodiment of the present application.
FIG. 16 is a schematic structural diagram showing the hardware operating environment according to the embodiment of the present application.

The realization of the objective, functional characteristics, and advantages of the present application are further described with reference to the accompanying drawings.

### DETAILED DESCRIPTION OF THE EMBODIMENTS

It should be understood that the specific embodiments described herein are merely illustrative and not intended to limit the scope of the present application.

To better understand embodiments of the present application, the following is a brief description for the embodiments of the present application.

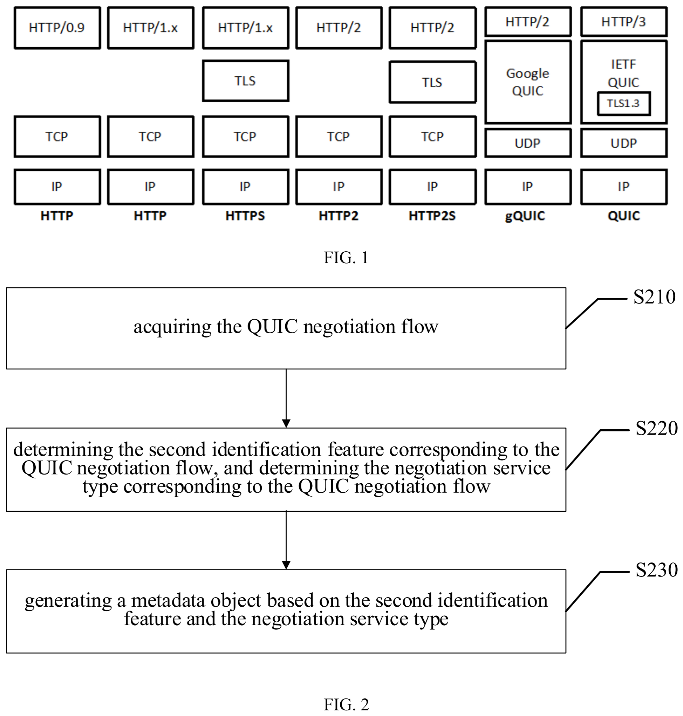

As shown in FIG. 1, FIG. 1 is a schematic diagram showing the evolution of HTTP and QUIC according to an embodiment of the present application. From 1990 to the present, HTTP has evolved from HTTP/0.9, HTTP/1.0, HTTP/1.1, HTTP/2 to the QUIC-based HTTP/3 of 2022. Specifically, this includes an evolution from the transmission based on transmission control protocol (TCP) to the transmission based on user datagram protocol (UDP), and an evolution from the encryption based on transport layer security (TLS) to the encryption based on QUIC. The patterns of HTTP network traffic are becoming increasingly complex, making it more and more difficult for the DPI system to identify HTTP network traffic.

Since QUIC introduces connection migration functionality, supports for connection migration have appeared in newer QUIC implementations. Network traffic based on QUIC connection migration already exists in the important services (service types include YouTube, Google Play, Instagram, and the like.) of some large internet companies (such as Google, Meta, and the like).

For HTTP/3 services based on non-connection migration, the DPI system can accurately identify the service type by detecting SNI in the ClientHello message of the initial packet during the negotiation stage. For example, if the DPI system detects that the SNI contains ".youtube.com" or ".googlevideo.com", it will identify the relevant QUIC negotiation flow as YouTube.

However, for HTTP/3 services based on connection migration, the QUIC migration flow after connection migration is a completely new form for the DPI system. In practical applications, the DPI system cannot identify it, and the identification result is usually "Unknown UDP", meaning it is identified as an unknown service type.

In practical applications, research has revealed that the negotiation service type corresponding to the QUIC negotiation flow is actually the same as the migration service type corresponding to the QUIC migration flow. Therefore, when the migration service type cannot be directly determined through the QUIC migration flow, based on the relationship between the QUIC migration flow and the QUIC negotiation flow, the negotiation service type can be considered as the migration service type after acquiring the negotiation service type, thereby indirectly determining the migration service type. Therefore, after connection migration, the problem of how to determine the migration service type corresponding to the QUIC migration flow can be transformed into the problem of how to determine the migration service type corresponding to the QUIC migration flow through the relationship between the QUIC migration flow and the QUIC negotiation flow.

To determine the relationship between the QUIC migration flow and the QUIC negotiation flow, research has revealed that the QUIC migration flow and the QUIC negotiation flow share the same identification feature. The identification feature represents the relationship between the QUIC migration flow and the QUIC negotiation flow. Based on this feature, the negotiation service type matching the QUIC negotiation flow corresponding to the QUIC migration flow can be determined, thereby acquiring the migration service type. The process of determining the migration service type corresponding to the QUIC migration flow based on the identification feature includes: acquiring the QUIC migration flow; after determining the first identification feature corresponding to the QUIC migration flow, matching and acquiring the negotiation service type corresponding to the first identification feature from the metadata object, the metadata object being generated based on the second identification feature and the negotiation service type matching the QUIC negotiation flow corresponding to the migration flow; finally, configuring the negotiation service type as the migration service type corresponding to the QUIC migration flow.

Based on the same identification feature, the negotiation service type corresponding to the QUIC negotiation flow is used to determine the migration service type matching the QUIC migration flow corresponding to the QUIC negotiation flow. In this way, the migration service type corresponding to the QUIC migration flow can be determined after connection migration.

The DPI system is deployed on the electronic device. The electronic device includes but not is limited to, various gateways or routing products, standalone DPI devices, network traffic analysis devices, and service experience-sensitive detection devices. The present application includes a first embodiment and a second embodiment. The first embodiment relates to the processing stage that the DPI system processes the QUIC migration flow, and the second embodiment relates to the processing stage that the DPI system processes the QUIC negotiation flow.

### First embodiment

In the processing stage that the DPI system processes the QUIC negotiation flow, following steps are included: determining the QUIC negotiation flow; identifying the negotiation service type corresponding to the QUIC negotiation flow based on SNI; extracting the second identification feature corresponding to the QUIC negotiation flow; and recording the second identification feature and the negotiation service type, for determining the migration service type.

As shown in FIG. 2, FIG. 2 is a flowchart of a method for determining a service type of network traffic according to a first embodiment of the present application.

The present application provides embodiments of the method for determining the service type of the network traffic. It should be noted that, although the logical order is shown in the flowchart, in some cases, steps shown or described may be performed in a different order than that shown here. The method for determining the service type of the network traffic includes following steps.

Step S210, acquiring the QUIC negotiation flow.

The step of acquiring the QUIC negotiation flow involves determining the QUIC negotiation flow.

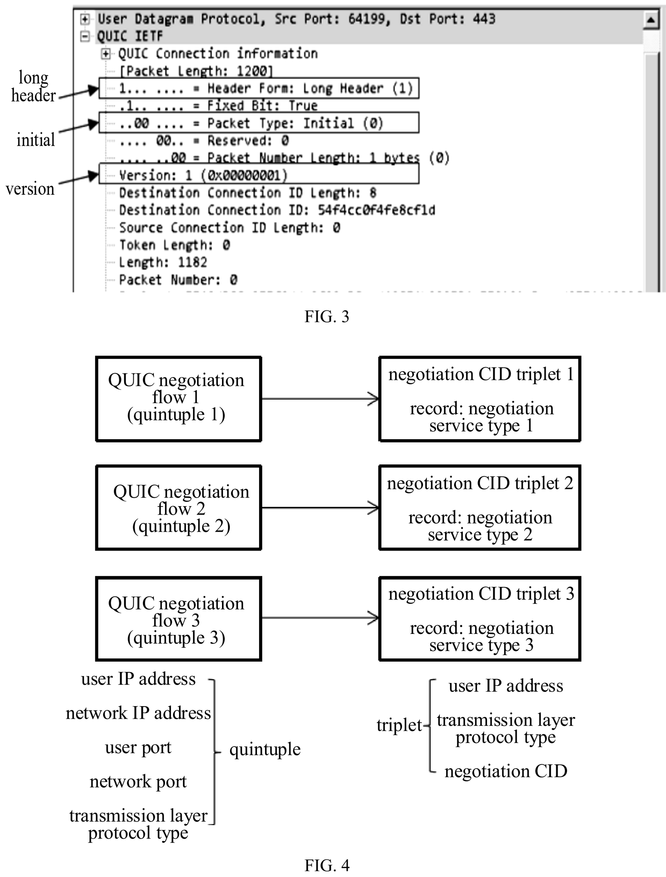

In the step of determining the QUIC negotiation flow, the DPI system checks the first packet in each processed flow and determines the flow to which the packet meeting following check conditions belongs as the QUIC negotiation flow. As shown in FIG. 3, FIG. 3 is a schematic diagram showing packet decoding of the method for determining the service type of the network traffic according to the first embodiment of the present application. Condition 1, the network layer protocol of the packet being IPv4 or IPv6. Condition 2, the transmission layer protocol type of the packet being UDP. Condition 3, the direction of the packet being the uplink direction, that is, from the user side (terminal) to the network side (server). Condition 4, the UDP payload length of the packet being greater than or equal to 1200 bytes, and the requirement that the UDP payload is of at least 1200 bytes being specified in RFC 9000 protocol. Condition 5, the packet being decoded according to the QUIC protocol header, and the header format being a QUIC long header. Condition 6, the packet being decoded according to the QUIC protocol header, and the packet type being the QUIC initial packet. Condition 7, the packet being decoded according to the QUIC protocol header, to acquire the correct QUIC version number (for example, QUIC v1 version number is 0x00000001).

For flows that fail the above checks, the DPI system determines these flows are not QUIC negotiation flows, then the DPI system marks them, and stops further processing on subsequent packets from that flow to determine their service type. For flows that pass the checks, the DPI system proceeds to the step of identifying the negotiation service type corresponding to the QUIC negotiation flow based on SNI.

For example, the DPI system manages flows using the quintuple. The quintuple as a whole is a key, composed of five pieces of metadata in a constant order, and a key only determines the corresponding quintuple context. The five pieces of metadata include: the user internet protocol (IP) address, the network IP address (the IP address of the QUIC server), the user port, the network port, and the transmission layer protocol type (UDP or TCP).

For example, the quintuple is used to generate a quintuple object, which includes a key (the quintuple), a value (service type (acquired by the DPI system to identify the QUIC negotiation flow through SNI) and flow status information), and the correspondence between the key and the value.

Step S220, determining the second identification feature corresponding to the QUIC negotiation flow, and determining the negotiation service type corresponding to the QUIC negotiation flow.

The step of determining the second identification feature corresponding to the QUIC negotiation flow and determining the negotiation service type corresponding to the QUIC negotiation flow includes: identifying the negotiation service type corresponding to the QUIC negotiation flow based on SNI and extracting the second identification feature corresponding to the QUIC negotiation flow.

Step S230, generating a mapping relationship between the feature and the service type based on the second identification feature and the negotiation service type. This mapping relationship is used to determine the migration service type matching the QUIC migration flow corresponding to the QUIC negotiation flow.

In the step of identifying the negotiation service type corresponding to the QUIC negotiation flow based on SNI, the DPI system decodes the packets (usually the first packet) in the QUIC negotiation flow according to the encoding rules of the QUIC CRYPTO frame and the encoding rules of TLS 1.3 ClientHello message. If decoding fails, the DPI system marks the flow and does not perform further processing to determine the service type of subsequent packets in the flow. If decoding is successful, the DPI system proceeds to the step of extracting the second identification feature corresponding to the QUIC negotiation flow.

During the decoding process, the DPI system acquires the identification result of the QUIC negotiation flow by detecting the SNI in the ClientHello message.

For example, if the detected SNI is "www.youtube.com" or "sn-i6blkns2.googlevideo.com", meaning SNI contains the feature string ".youtube.com" or ".googlevideo.com", then the DPI system identifies the QUIC negotiation flow as YouTube.

For another example, if SNI is detected as "graph.facebook.com", meaning SNI contains the feature string ".facebook.com", the DPI system identifies the QUIC negotiation flow as Facebook.

For unidentifiable SNIs, the DPI system marks the flow and does not perform further processing to determine the service type of subsequent packets from that flow. Only when SNI is successfully identified does the DPI system proceed to extract the second identification feature corresponding to the QUIC negotiation flow. It can be understood that only QUIC negotiation flows that the DPI system can identify need further processing to determine the service type. QUIC negotiation flows that the DPI system cannot identify do not need further processing to determine the service type.

In the step of extracting the second identification feature corresponding to the QUIC negotiation flow, the second identification feature is either a negotiation connection identifier (CID) triplet or a negotiation network address triplet.

When the second identification feature is a negotiation CID triplet, this negotiation CID triplet at least includes the negotiation CID, and the other two pieces of metadata can be the user internet protocol (IP) address and the transmission layer protocol type.

The above step of determining the second identification feature corresponding to the QUIC negotiation flow includes: acquiring the negotiation CID from the QUIC negotiation flow; generating a negotiation CID triplet based on the negotiation CID. The mapping relationship is a negotiation CID triplet object. The step of generating a mapping relationship between the feature and the service type based on the second identification feature and the negotiation service type includes: generating a negotiation CID triplet object based on the negotiation CID triplet and the negotiation service type. The migration CID triplet is used to match and acquire the negotiation service type corresponding to the negotiation CID triplet that is the same as the migration CID triplet from the negotiation CID triplet object.

As shown in FIG. 4, FIG. 4 is a flowchart showing the generation of a negotiation CID triplet object of the method for determining the service type of the network traffic according to the first embodiment of the present application. In FIG. 4, three triples are generated from the quintuple of the three QUIC negotiation flows. The quintuple includes five pieces of metadata, namely the user IP address, the network IP address, the user port, the network port, and the transmission layer protocol type. This triplet uses two pieces of metadata, namely, the user IP address and the transmission layer protocol type. Each negotiation CID triplet object includes the negotiation CID triplet and the corresponding record (namely, the negotiation service type). For example, the negotiation CID triplet object 1 includes the negotiation CID triplet 1 and the corresponding negotiation service type 1.

For QUIC negotiation flows, after acquiring the negotiation CID, the DPI system simultaneously acquires the user IP address and the transmission layer protocol type from the packet information of the QUIC negotiation flow. Then the user IP address, the transmission layer protocol type, and the negotiation CID are used as a negotiation triplet to create a negotiation CID triplet object.

Before creating the negotiation CID triplet object, the DPI system checks whether the negotiation CID triplet object already exists. If the negotiation CID triplet object does not exist, the DPI system creates a new negotiation CID triplet object and records the negotiation service type (for example, YouTube) corresponding to the current QUIC negotiation flow into this negotiation CID triplet object. If the negotiation CID triplet object exists, the DPI system updates the original value in the negotiation CID triplet object with the current negotiation service type.

As shown in FIG. 4, since the negotiation CID of different QUIC negotiation flows for the same user (namely, the same user IP address) is usually not the same, the negotiation CID triplet object for each QUIC negotiation flow is different.

The method for determining the service type of the network traffic further includes: acquiring a negotiation quadruple and the negotiation length of the negotiation CID from the QUIC negotiation flow; generating a negotiation quadruple object based on the negotiation length and the negotiation quadruple. The negotiation quadruple object is used to extract the migration CID from the first packet in the QUIC migration flow, and the migration CID is used to generate a migration CID triplet.

Since the DPI system cannot directly acquire the migration CID from the QUIC migration flow, it can acquire the negotiation length, which is used for the DPI system to acquire the migration CID from the QUIC migration flow.

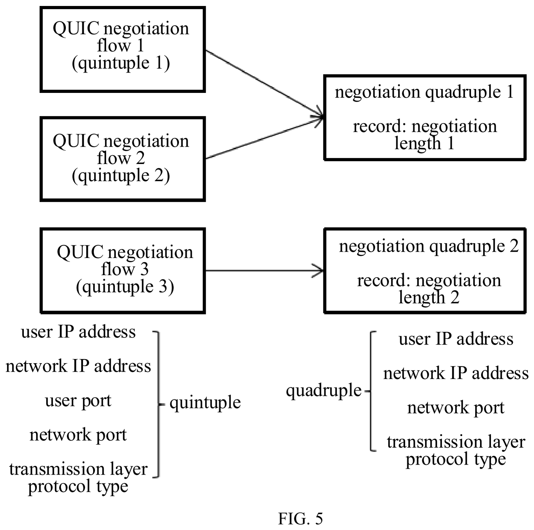

As shown in FIG. 5, FIG. 5 is a flowchart showing the generation of a negotiation quadruple object of the method for determining the service type of the network traffic according to the first embodiment of the present application. It should be noted that the DPI system acquires the negotiation quadruple from the first packet of the QUIC negotiation flow to establish the negotiation quadruple object. This quadruple includes: the user IP address, the network IP address, the network port, and the transmission layer protocol type (UDP).

Before establishing the negotiation quadruple object, the DPI system checks whether the negotiation quadruple object already exists. If the negotiation quadruple object does not exist, the DPI system creates a new negotiation quadruple object and records the negotiation length in the new negotiation quadruple object. If the negotiation quadruple object exists, the DPI system updates the original value in the negotiation quadruple object with the negotiation length.

Different QUIC negotiation flows (the QUIC negotiation flow 1, the QUIC negotiation flow 2, and the QUIC negotiation flow 3 in FIG. 5) may correspond to the same negotiation quadruple object or different negotiation quadruple objects.

The process involves acquiring the negotiation CID and the negotiation length of the negotiation CID from the QUIC negotiation flow.

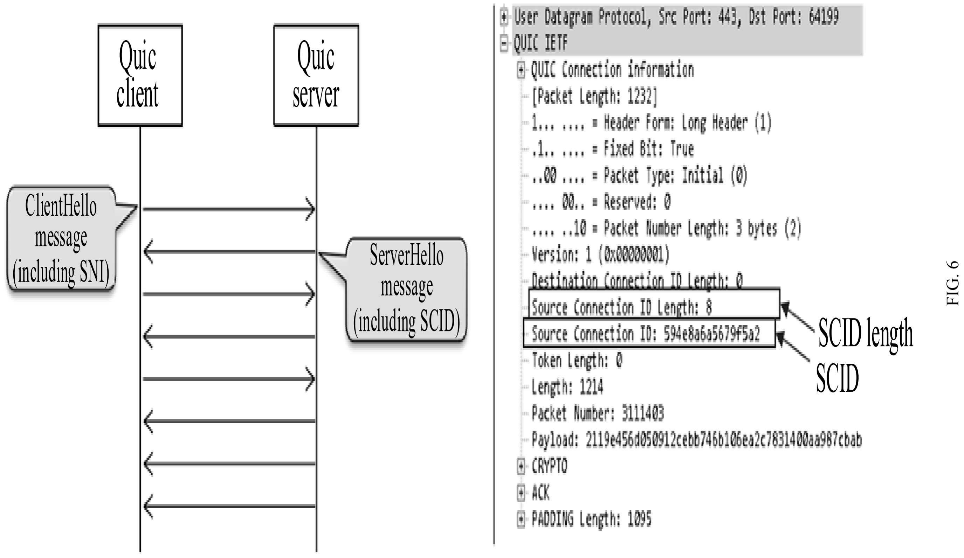

As shown in FIG. 6, FIG. 6 is a schematic diagram showing the composition of a packet message of the method for determining the service type of the network traffic according to the first embodiment of the present application. The DPI system can acquire the source connection ID (SCID) and the SCID length from the QUIC header in which the TLS 1.3 ServerHello message (a message in the first packet) of the QUIC negotiation flow is located. The DPI system can further acquire the SCID and SCID length from the QUIC header of the first downlink (from the network side to the user side) long-header initial packet (the first packet) that appears for the first time in the QUIC negotiation flow.

The "long header" indicates that the QUIC header decoding header type is the long header, and the "initial packet" indicates that the QUIC header decoding packet type is the initial packet.

The ServerHello message is an encrypted message, and only after decryption can it be determined whether the first packet contains the ServerHello message. To avoid the system performance loss caused by decryption, in this embodiment, the DPI system does not decrypt the messages in the first packet, but instead efficiently infers whether the first packet contains the ServerHello message only through the encoded information in the QUIC packet header.

After acquiring SCID and the SCID length, the DPI system will configure the content from the second byte of SCID to the last byte of SCID as the negotiation CID. For example, if the SCID is "594e8a6a5679f5a2"" in hexadecimal, the negotiation CID will be obtained as "4e8a6a5679f5a2" in hexadecimal .

According to the encoding format specified upon in SCID of the QUIC RFC protocol, the first byte of SCID is variable. Therefore, the DPI system starts taking CID from the second byte of SCID.

The negotiation length of the negotiation CID is equal to the length of SCID minus 1. For example, if the SCID length is of 8 bytes, the negotiation length is of 7 bytes. The CID is assigned by the QUIC server, and different QUIC server vendors can define different CID lengths. For example, the length range specified by RFC8999 is of 0 bytes to 255 bytes, and the length range specified by RFC9000 is of 0 bytes to 20 bytes. A common SCID length is of 8 bytes.

### Second embodiment

In the stage that the DPI system processes the QUIC migration flow, following steps are included: determining the QUIC migration flow; determining the first identification feature corresponding to the QUIC migration flow; and performing association identification based on the first identification feature.

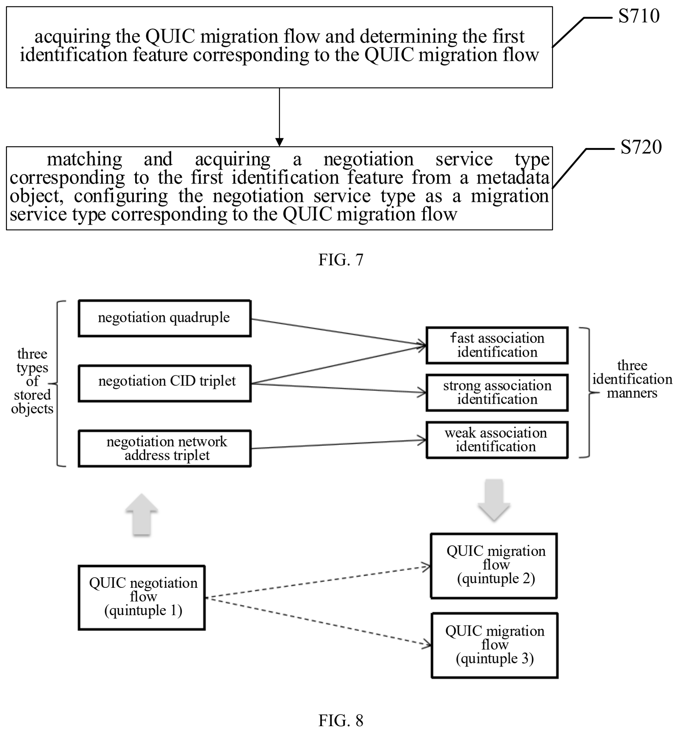

As shown in FIG. 7, FIG. 7 is a flowchart of the method for determining the service type of the network traffic according to a second embodiment of the present application.

The present application provides embodiments of the method for determining the service type of the network traffic. It should be noted that although the logical order is shown in the flowchart, in some cases, steps shown or described may be performed in a different order than that shown here. The method for determining the service type of the network traffic includes:
step S710, acquiring the QUIC migration flow and determining the first identification feature corresponding to the QUIC migration flow;
acquiring determination of the QUIC migration flow involving the QUIC migration flow.

In the process of determining the QUIC migration flow, the DPI system checks the first packet of each processed flow. The flows to which packets meeting the following checking rules belong are preliminarily identified as the QUIC migration flow. Criterion 1, the network layer of the packet being IPv4 or IPv6. Criterion 2, the transmission layer of the packet being UDP. Criterion 3, the packet direction being uplink, namely, from the user side (terminal) to the network side (server). Criterion 4, the packet being decoded according to the QUIC protocol header, and the header format being a short header. Criterion 5, the UDP flow failing to be identified by the DPI system as a specific service type through feature word matching, the QUIC migration flow being encrypted and failing to contain contents that can be matched by feature words.

For flows that fail the above checks, the DPI system determines these flows are not QUIC migration flows, then the DPI system marks these flows, and stops further processing of subsequent packets from that flow to determine their service type. For flows that pass the checks, the DPI system proceeds to determine the first identification feature corresponding to the QUIC migration flow.

Before performing association identification, the first identification feature corresponding to the QUIC migration flow needs to be determined, and association identification is performed based on the first identification feature.

Association identification includes fast association identification, strong association identification, and weak association identification. The first identification feature may differ for different association identifications. Specifically, the first identification feature for fast association identification and strong association identification may be a migration CID triplet, which at least includes the migration CID. The first identification feature for weak association identification may be a migration network address triplet.

As shown in FIG. 8, FIG. 8 is a schematic diagram showing the identification process of three identification manners of the method for determining the service type of the network traffic according to the second embodiment of the present application. The process is as follows. A second identification feature is determined through the quintuple 1 in the QUIC negotiation flow. This second identification feature is a part of three types of stored objects, namely, a negotiation quadruple object, a negotiation CID triplet object, and a negotiation network address triplet object. Then, the two QUIC migration flows are identified using the identification method and the second identification feature. This identification process uses the first identification feature to identify the migration service type corresponding to the QUIC migration flow from these three types of stored objects. When using fast association identification to identify QUIC migration flows, it is necessary to generate a negotiation quadruple and a negotiation CID triplet through the quintuple 1 of the QUIC negotiation flow. In strong association identification, the negotiation CID triplet is generated only through the quintuple 1 of the QUIC negotiation flow. In weak association identification, the negotiation network address triplet is generated only through the quintuple 1 of the QUIC negotiation flow.

Step S720, acquiring the negotiation service type corresponding to the first identification feature from the metadata object. The metadata object is generated based on the negotiation service type and the second identification feature matching the QUIC negotiation flow corresponding to the QUIC migration flow. The negotiation service type is configured as the migration service type corresponding to the QUIC migration flow.

The metadata object is one of the negotiation CID triplet object and the negotiation network address triplet object mentioned above. The second identification feature is the key of the metadata object, and the negotiation service type is the value of the metadata object. There is a correspondence between the key and the value. That is, the metadata object exists in the form of key-value pairs. By using the first identification feature as the key, the corresponding value can be matched to acquire the migration service type.

The embodiments of the present application are described in the following for three association identification methods.

### Fast association identification

Fast association identification is a special case of strong association identification. Fast association identification is used in non-cross-network migration scenarios. In this case, according to the QUIC protocol (RFC 9000), although the uplink packet of the QUIC migration flow contains the migration CID, it does not contain the migration length of that migration CID. Therefore, the specific nature of the migration CID is unknown. In view of this, fast association identification addresses how to quickly determine the migration length to accurately acquire the migration CID, thereby identifying the QUIC migration flow.

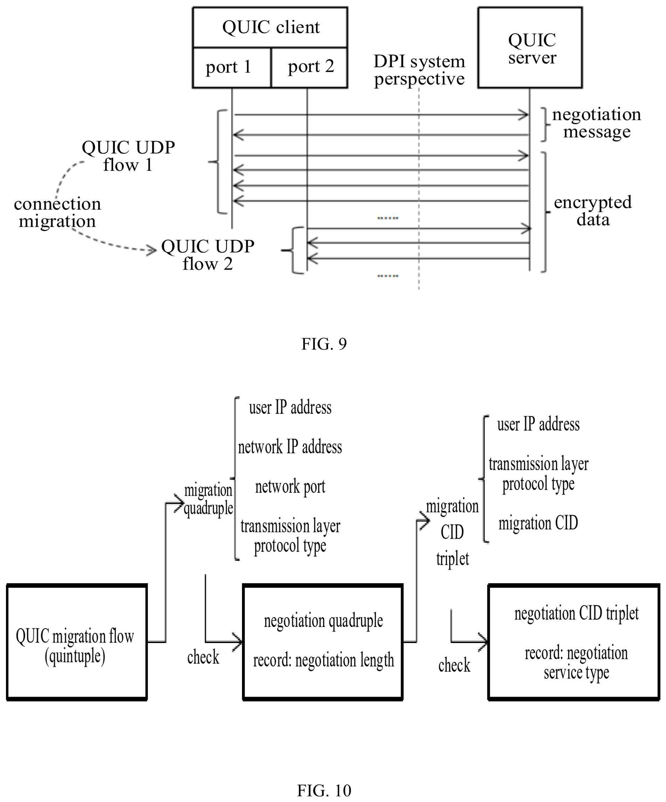

As shown in FIG. 9, FIG. 9 is a schematic diagram showing the connection migration process of the method for determining the service type of the network traffic in the non-cross-network migration scenario according to the second embodiment of the present application. In this scenario, for services based on the same QUIC connection, the QUIC client (deployed on the terminal device) first negotiates with the QUIC server via the QUIC UDP flow 1 and transmits encrypted data. After a period of time, the QUIC client performs connection migration and continues transmitting encrypted data with the QUIC server via the QUIC UDP flow 2.

Since the QUIC UDP flow 1 contains a special indicator (SNI) in the ClientHello message of the initial packet during the negotiation stage, the DPI system can accurately identify the QUIC UDP flow 1 based on the features in this SNI. However, since the QUIC UDP flow 2 does not contain the ClientHello message of the initial packet during the negotiation stage and all data is encrypted, the DPI system cannot identify the QUIC UDP flow 2 using the SNI feature detection method.

The QUIC server can associate the QUIC negotiation flow (the QUIC UDP flow 1 in FIG. 9) with the QUIC migration flow (the QUIC UDP flow 2 in FIG. 9) using the CID in the QUIC packet. This is due to the QUIC server participates in the entire QUIC negotiation process, and it possesses accurate information about parameters, such as CID in the QUIC connection process, allowing it to accurately correlate the QUIC migration flow with the QUIC negotiation flow. It can be understood that, the negotiation CID in the QUIC negotiation flow and the migration CID in the QUIC migration flow are identical within the same QUIC connection.

Since the migration CID and the negotiation CID are the same, the migration length is the same as the negotiation length.

The steps for determining the first identification feature corresponding to the QUIC migration flow include: determining the migration CID based on the QUIC migration flow; generating the migration CID triplet based on the migration CID. The metadata object is a negotiation CID triplet object, and the second identification feature is a negotiation CID triplet. The step of matching and acquiring the negotiation service type corresponding to the first identification feature from the metadata object includes: matching and acquiring the negotiation service type corresponding to the negotiation CID triplet that is the same as the migration CID triplet from the negotiation CID triplet object.

For example, determining the migration CID based on the QUIC migration flow includes: acquiring a migration quadruple from the QUIC migration flow; determining a negotiation value corresponding to the negotiation quadruple that is the same as the migration quadruple from the negotiation quadruple object corresponding to the QUIC negotiation flow, the negotiation value being the negotiation length of the negotiation CID corresponding to the QUIC negotiation flow, the negotiation length of the negotiation CID being the same as the migration length of the migration CID; and extracting the migration CID from the first packet in the QUIC migration flow based on the migration length.

As shown in FIG. 10, FIG. 10 is a flowchart showing the rapid association identification process of the method for determining the service type of the network traffic according to the second embodiment of the present application. The DPI system acquires the migration quadruple from the first packet of the QUIC migration flow. This migration quadruple includes: the user IP address, the network IP address, the network port, and the transmission layer protocol type (UDP).

The DPI system queries whether the negotiation quadruple object corresponding to this migration quadruple already exists. If it exists, the DPI system acquires the negotiation length from the negotiation quadruple object and uses this negotiation length as the migration length; if it does not exist, the DPI system attempts to identify the QUIC migration flow through strong association identification or weak association identification.

The DPI system checks the UDP payload length of the first packet of the QUIC migration flow. The DPI system determines whether the UDP payload length is greater than a length obtained by adding 1 to the migration length. If the UDP payload length is greater than a length obtained by adding 1 to the migration length, the DPI system acquires the migration CID using the migration length; otherwise, the DPI system attempts to identify the QUIC migration flow using strong association identification or weak association identification.

When the migration CID is acquired using the migration length, the DPI system acquires the migration CID from the UDP payload of the first packet in the QUIC migration flow, starting from the third byte, based on the acquired migration length. For example, the migration CID can be "a3c715961737be".

According to the QUIC RFC protocol, this short-header packet starts with the destination connection ID (DCID) in the second byte of the UDP payload. The DPI system then acquires the migration CID starting from the second byte of this DCID.

The DPI system uses the user IP address, the transmission layer protocol type, and the migration CID as the migration CID triplet, namely, the DPI system generates the migration CID triplet through the migration CID. The DPI system then uses this migration CID triplet to query whether a negotiation CID triplet object exists. If a negotiation CID triplet object exists, the DPI system acquires the negotiation service type recorded in the corresponding QUIC negotiation flow from the negotiation CID triplet object, and uses the negotiation service type as the migration service type of the QUIC migration flow, thus completing identification of the QUIC migration flow. If a negotiation CID triplet object does not exist, the DPI system attempts to identify the QUIC migration flow through weak association identification.

For example, before generating the migration CID triplet based on the migration CID, the process includes: determining whether the migration CID is valid; if the migration CID is valid, then performing the step of generating the migration CID triplet based on the migration CID.

Before generating the migration CID triplet through the migration CID, the DPI system further checks whether the migration CID is valid. For the valid migration CID, further processing is performed. If the migration CID is invalid, the DPI system determines the flow is not a genuine QUIC migration flow, then marks the flow, and does not perform further processing on the packets of the flow.

In an embodiment, the DPI system determines the validity of the migration CID by checking whether each byte value of the migration CID is different. If each byte value of the migration CID is unique, the DPI system determines it is valid. If the migration CID contains same byte values, the DPI system determines it is invalid. For example, if the migration CID is "a3c715961737be" in hexadecimal, and each byte hexadecimal value of "a3", "c7", "15", "96", "17", "37", "be" is unique, then the migration CID is considered valid.

In another embodiment, the DPI system determines the validity of the migration CID by calculating the entropy value. The DPI system considers each byte value of the migration CID as a set of numbers, calculates the frequency and probability of each number, and calculates the entropy value of the migration CID using the Shannon entropy formula. If the entropy value is greater than or equal to a threshold preset by the DPI system, the DPI system determines the migration CID is valid. If the entropy value is less than the threshold preset by the DPI system, the DPI system determines the migration CID is invalid. The threshold can be set as needed, which will not be limited in this embodiment.

For example, determining the migration CID based on the QUIC migration flow includes: acquiring multiple second packets in the QUIC migration flow; extracting the longest common prefix code flow from the multiple second packets; and determining the migration CID based on the longest common prefix code flow.

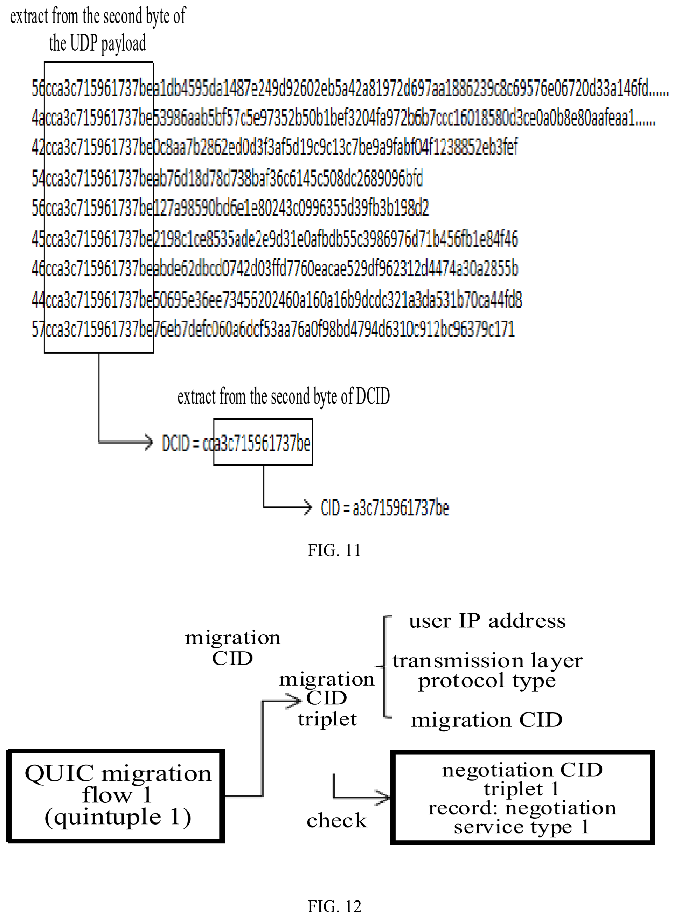

As shown in FIG. 11, FIG. 11 is a schematic diagram showing the detection of migration CID in the uplink packet of the method for determining the service type of the network traffic according to the second embodiment of the present application. For the QUIC migration flow, the DPI system continuously acquires the first N uplink packets of the migration flow and attempts to detect possible migration CID from these N uplink packets.

In an embodiment, starting from the second byte of each UDP payload of the first N uplink packets of the QUIC migration flow, the DPI system acquires their longest common prefix code flow based on the basic longest common prefix (LCP) algorithm in the field of string processing, and then the DPI system configures the longest common prefix code flow as the detected DCID. After that, the DPI system takes the bytes from the second byte of the detected DCID to the end of the detected DCID as the detected migration CID.

FIG. 11 shows the first nine uplink packets of the QUIC migration flow. Assuming each packet represents the UDP payload portion of an uplink packet in this QUIC migration flow, the common prefix portion of the code flow starting from the second byte of each UDP payload, as shown in the box, is the detected DCID, and the second byte of the DCID is configured as the detected migration CID.

Strong correlation identification addresses cross-network migration scenarios, such as the QUIC connection migrating from a wired WiFi network of operator 1to a mobile cellular network of operator 2. The DPI system deployed in the latter network can only observe the QUIC migration flow, not the QUIC negotiation flow in the former network. Therefore, strong correlation identification addresses the problem of identifying such isolated QUIC migration flows.

As shown in FIG. 12, FIG. 12 is a flowchart showing the strong association identification of the method for determining the service type of the network traffic according to the second embodiment of the present application. The DPI system uses the aforementioned validity check method to verify the validity of the detected migration CID. If the detected migration CID is valid, further processing is performed; if the detected migration CID is invalid, the DPI system determines that the flow is not a genuine QUIC migration flow, marks the flow, and stops further processing of the packets of the flow. The specific implementation method for generating migration CID triplets through the migration CID is substantially the same as the implementation method in the rapid association identification described above, which will not be repeated here.

For example, the first identification feature is a migration network address triplet. Determining the first identification feature corresponding to the QUIC migration flow includes: acquiring a migration quintuple from the QUIC migration flow; extracting a first portion content from the migration quintuple as the migration network address triplet. The first portion content remains unchanged before and after the connection migration. The metadata object is a negotiation network address triplet object, and the second identification feature is a negotiation network address triplet. The step of matching and acquiring the negotiation service type corresponding to the first identification feature from the metadata object includes: match and acquiring the negotiation service type corresponding to the negotiation network address triplet that is the same as the migration network address triplet from the negotiation network address triplet object.

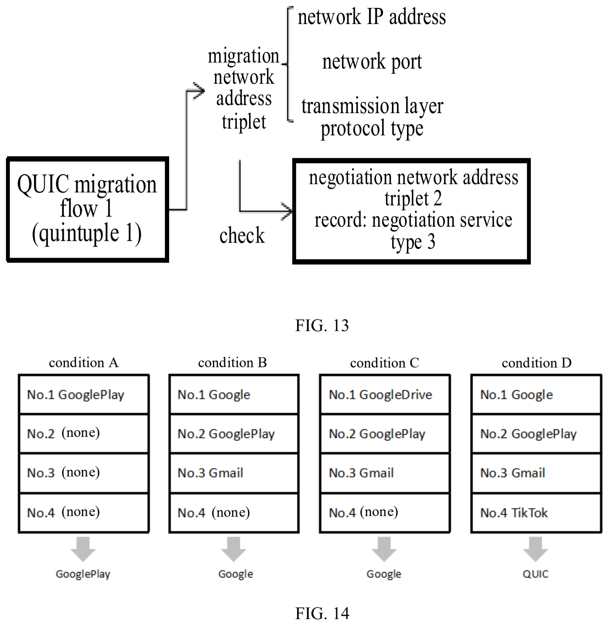

As shown in FIG. 13, FIG. 13 is a flowchart showing the weak association identification of the method for determining the service type of the network traffic according to the second embodiment of the present application. The DPI system uses the network IP address, the network port, and the transmission layer protocol type as the migration network address triplet and queries whether the negotiation network address triplet object corresponding to the migration network address triplet exists. If the negotiation network address triplet object exists, the DPI system acquires the negotiation service type recorded in the corresponding QUIC negotiation flow from the negotiation network address triplet object, and uses this negotiation service type as the migration service type of the QUIC migration flow, thereby completing the identification of the QUIC migration flow.

As shown in FIG. 14, FIG. 14 is a schematic diagram showing the results recorded in the negotiation network address triplet object of the method for determining the service type of the network traffic according to the second embodiment of the present application. When the negotiation network address triplet object records multiple different negotiation service types, the DPI system can assign the corresponding migration service type to the QUIC migration flow based on the relationship between these multiple negotiation service types.

As shown in FIG. 14, the multiple different negotiation service types recorded in the negotiation network address triplet object include following four cases.

In case A, the negotiation network address triplet object records only one negotiation service type. In this case, the DPI system directly uses this negotiation service type as the migration service type of the QUIC migration flow, thus completing the identification of the QUIC migration flow.

In case B, the negotiation network address triplet object records multiple different negotiation service types, and these service types have inclusion relationships. The DPI system, based on preset inclusion relationship information of negotiation service types, selects the most generalized negotiation service type within that inclusion relationship as the migration service type of the QUIC migration flow. As shown in FIG. 14, the negotiation network address triplet object records three different negotiation service types. The negotiation service type 1 is Google, the negotiation service type 2 is GooglePlay, and the negotiation service type 3 is Gmail. Since the system presets the information that "Google includes GooglePlay and Gmail", the DPI system will select the negotiation service type 1 and configured the migration service type of the QUIC migration flow as Google.

In case C, the negotiation network address triplet object records multiple negotiation service types, and there is no mutual inclusion relationship between multiple negotiation service types. However, according to the preset inclusion relationship information of negotiation service types, the DPI system knows that these negotiation service types all belong to another generalized negotiation service type. Therefore, the system selects the generalized negotiation service type as the migration service type of the QUIC migration flow. As shown in FIG. 14, the negotiation network address triplet object records three different negotiation service types. The negotiation service type 1 is Google Drive, the negotiation service type 2 is Google Play, and the negotiation service type 3 is Gmail. There is no mutual inclusion relationship between these three negotiation service types, but the DPI system presets the information that "Google includes Google Drive, Google Play, and Gmail". Therefore, the DPI system determines the migration service type of this QUIC migration flow to be Google.

In case D, the negotiation network address triplet object records multiple negotiation service types, and there is no mutual inclusion relationship between these service types. The DPI system, based on preset inclusion information of negotiation service types, knows that these service types do not belong to a generalized negotiation service type. Therefore, the DPI system determines the QUIC migration flow cannot be identified as a specific service type, but the DPI system can still identify the QUIC migration flow as "QUIC". This QUIC migration flow is a pure encrypted code flow without DPI features. If the QUIC migration flow is not identified as "QUIC", the DPI system usually cannot identify the QUIC migration flow, and the identification result is usually set to "Unknown UDP". Therefore, although the QUIC migration flow cannot be specifically identified due to conflicts between multiple negotiation service types, identifying the QUIC migration flow as "QUIC" is still better than identifying the QUIC migration flow as "Unknown UDP"".

For example, the method for determining the service type of the network traffic further includes: inputting the identification result information corresponding to the migration service type into the extended field of the tunnel header of the third packet; and sending the third packet to the external system.

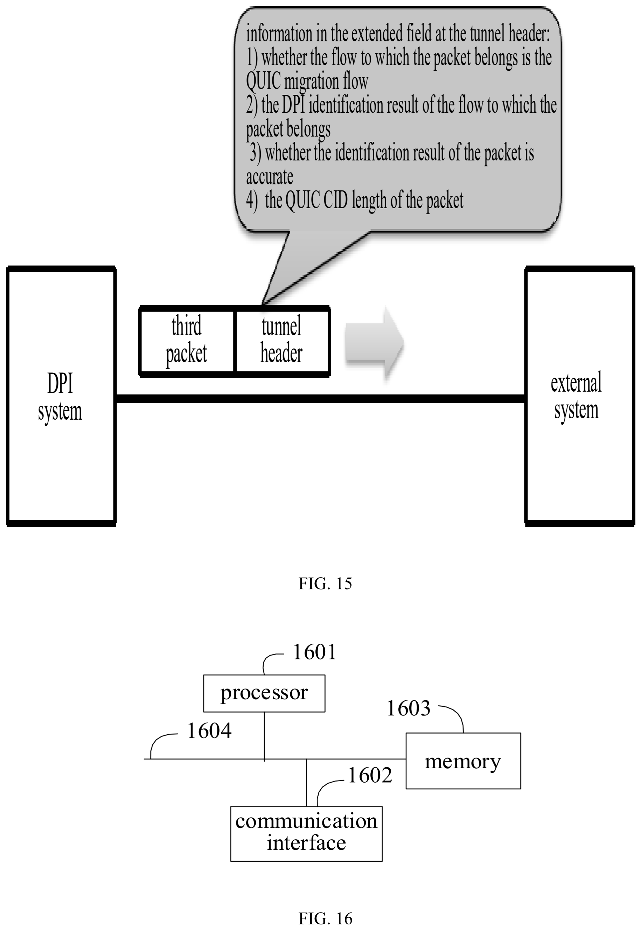

As shown in FIG. 15, FIG. 15 is a schematic diagram showing the interaction between the DPI system and the external system in the method for determining the service type of the network traffic according to the second embodiment of the present application.

After identifying the QUIC migration flow and successfully acquiring the migration service type of the QUIC migration flow through the association identification method mentioned above, the DPI system can input the identification result information of the QUIC migration flow into the extended field of the tunnel header of the third packet. This allows the external system to directly acquire the migration service type of the QUIC migration flow from the extended field of the tunnel header after the third packet is forwarded to the external system. In this way, the external system can be prevented from performing redundant identification and processing on the QUIC migration flow, thus improving performance of the external system.

The identification result information of the QUIC migration flow in the extended field at the tunnel header of the third packet includes, but is not limited to: whether the flow to which the third packet belongs is the QUIC migration flow; the DPI identification result of the flow to which the third packet belongs; whether the identification result of the third packet is accurate; and the QUIC CID length (such as, the migration length) of the third packet.

To determine whether the flow to which the third packet belongs is the QUIC migration flow, the external system can read the identification result information to determine whether the flow that the third packet belongs to is the QUIC migration flow.

Regarding the DPI identification result of the flow to which the third packet belongs, the external system, after reading the identification result information, can acquire the specific DPI identification result of the third packet and its flow, such as "Google", "YouTube", "QUIC", and the like. For example, the DPI identification result can be in the form of a numerical App ID agreed upon with the external system, such as agreeing that "Google" has an App ID of 2, "YouTube" has an App ID of 3, and "QUIC" has an App ID of 1.

Regarding the accuracy of the identification result of the third packet, the external system, after reading the identification result information, can determine whether the DPI identification result of the third packet and its flow is accurate. For DPI identification results acquired through fast association identification methods and strong association identification methods, the DPI system sets the extended information to accurate information. For DPI identification results acquired through weak association identification methods, the DPI system sets the extended information to inaccurate information.

Regarding the QUIC CID length of the third packet, after reading the identification result information, the external system can extract the migration CID based on the QUIC CID length and automatically associate the QUIC negotiation flow based on the migration CID, to make the QUIC migration flow consistent with its corresponding QUIC negotiation flow.

In an embodiment, taking the PDN Gateway (PGW) network element in the core network of a 3rd Generation Partnership Project (3GPP) 4G network as an example, the PGW network element is configured as the host network element of the DPI system. The PGW network element and the radio access network eNodeB network element transmit the third packet via the GPRS Tunneling Protocol (GTPU) tunnel. The DPI system encapsulates the identification result information of the QUIC migration flow of the third packet in the GTPU Private Extension extended field. Thus, the eNodeB network element directly acquires the identification result information of the third packet from this extended field, significantly reducing the processing burden of the eNodeB network element for the corresponding identification and detection of the third packet.

In another embodiment, taking the core network User Plane Function (UPF) element in a 3GPP 5G network as an example, the UPF element serves as the host network element of the DPI system. The UPF element and the radio access network gNodeB element transmit the third packet via the GTPU tunnel. The DPI system encapsulates the identification result information of the QUIC migration flow of the third packet in the GTPU Private Extension extended field. Thus, the gNodeB element directly acquires the identification result information of the third packet from this extended field, significantly reducing the processing burden of the gNodeB element for the corresponding identification and detection of the third packet

Furthermore, the present application further provides a device for determining the service type of the network traffic, including:
an acquisition module, configured to acquire the QUIC migration flow and determine a first identification feature corresponding to the QUIC migration flow;
a matching module, configured to match and acquire a negotiation service type corresponding to the first identification feature from a metadata object; the metadata object being generated based on a second identification feature and the negotiation service type matching the QUIC negotiation flow corresponding to the QUIC migration flow; and the negotiation service type being configured as the migration service type corresponding to the QUIC migration flow.

In an embodiment, the first identification feature is a migration CID triplet, which at least includes a migration CID. The acquisition module is specifically used to:
determine the migration CID based on the QUIC migration flow;
generate the migration CID triplet based on the migration CID.

The metadata object is a negotiation CID triplet object, and the second identification feature is a negotiation CID triplet. The step of matching and acquiring the negotiation service type corresponding to the first identification feature from the metadata object includes:
matching and acquiring the negotiation service type corresponding to the negotiation CID triplet that is the same as the migration CID triplet from the negotiation CID triplet object.

In an embodiment, the acquisition module is further configured to:
acquire a migration quadruple from the QUIC migration flow;
determine a negotiation value corresponding to the negotiation quadruple that is the same as the migration quadruple from the negotiation quadruple object corresponding to the QUIC negotiation flow; the negotiation value being the negotiation length of the negotiation CID corresponding to the QUIC negotiation flow; the negotiation length of the negotiation CID being the same as the migration length of the migration CID;
extract the migration CID from the first packet in the QUIC migration flow based on the migration length.

In an embodiment, the acquisition module is further configured to:
determine whether the migration CID is valid;
if the migration CID is valid, perform the step of generating the migration CID triplet based on the migration CID.

In an embodiment, the acquisition module is further configured to:
acquire multiple second packets in the QUIC migration flow;
extract the longest common prefix code flow from the multiple second packets;
determine the migration CID based on the longest common prefix code flow.

In an embodiment, the first identification feature is a migration network address triplet. The acquisition module is further configured to:
acquire a migration quintuple from the QUIC migration flow;
extract a first portion content from the migration quintuple as the migration network address triplet; the first portion content remaining unchanged before and after the connection migration.

The metadata object is a negotiation network address triplet object, and the second identification feature is further a negotiation network address triplet. The step of matching and acquiring the negotiation service type corresponding to the first identification feature from the metadata object:
matching and acquiring the negotiation service type corresponding to the negotiation network address triplet that is the same as the migration network address triplet from the negotiation network address triplet object.

In an embodiment, the device for determining the service type of the network traffic further includes:
an inputting module, configured to input the identification result information corresponding to the migration service type into the extended field of the tunnel header of the third packet; and
a sending module, configured to send the third packet to an external system.

The specific implementation of the device for determining the service type of the network traffic in the present application is substantially the same as the first embodiment of the method for determining the service type of the network traffic described above, which will not be repeated here.

Furthermore, the present application further provides a device for determining the service type of the network traffic, including:
a first acquisition module, configured to acquire a QUIC negotiation flow;
a determination module, configured to determine a second identification feature corresponding to the QUIC negotiation flow, and determine a negotiation service type corresponding to the QUIC negotiation flow;
a first generation module, configured to generate a metadata object based on the second identification feature and the negotiation service type; the metadata object being used to determine the migration service type matching the QUIC migration flow corresponding to the QUIC negotiation flow.

In an embodiment, the second identification feature is a negotiation CID triplet, which at least includes a negotiation CID. The determination module is specifically used to:
acquire the negotiation CID from the QUIC negotiation flow; and
generate the negotiation CID triplet based on the negotiation CID.

The metadata object is a negotiation CID triplet object. The step of generating the metadata object based on the second identification feature and the negotiation service type includes generating the negotiation CID triplet object based on the negotiation CID triplet and the negotiation service type. The migration CID triplet is used to match and acquire the negotiation service type corresponding to the negotiation CID triplet that is the same as the migration CID triplet from the negotiation CID triplet object.

In an embodiment, the device for determining the service type of the network traffic further includes:
a second acquisition module, configured to acquire the negotiation quadruple and the negotiation length of the negotiation CID from the QUIC negotiation flow; and
a second generation module, configured to generate a negotiation quadruple object based on the negotiation length and the negotiation quadruple; the negotiation quadruple object being used to extract the migration CID from the first packet in the QUIC migration flow; the migration CID being used to generate the migration CID triplet.

In an embodiment, the second identification feature is a negotiation network address triplet. The determination module is used to:
acquire a negotiation quintuple from the QUIC negotiation flow; and
extract a second portion content from the negotiation quintuple as the negotiation network address triplet; the second portion content remaining unchanged before and after connection migration.

The metadata object is a negotiation network address triplet object. The step of generating the metadata object based on the second identification feature and the negotiation service type includes generating the negotiation network address triplet object based on the negotiation network address triplet and the negotiation service type.

The specific implementation of the device for determining the service type of the network traffic in the present application is substantially the same as the second embodiment of the method for determining the service type of the network traffic described above, which will not be repeated here.

In addition, the present application further provides an electronic device. As shown in FIG. 16, FIG. 16 is a schematic structural diagram showing the hardware operating environment according to an embodiment of the present application.

As shown in FIG. 16, the electronic device may include a processor 1601, a communication interface 1602, a memory 1603, and a communication bus 1604. The processor 1601, the communication interface 1602, and the memory 1603 communicate with each other through the communication bus 1604. The memory 1603 is used to store computer programs. When the processor 1601 executes the program stored in the memory 1603, steps of the method for determining the service type of the network traffic are implemented.

The communication bus 1604 in the above-mentioned electronic device may be a peripheral component interconnect (PCI) bus or an extended industry standard architecture (EISA) bus, and the like. The communication bus 1604 may be divided into an address bus, a data bus, and a control bus, and the like. For ease of illustration, only a single thick line is used in the drawings, but this does not indicate that there is only one bus or one type of bus.

The communication interface 1602 is used to communicate the aforementioned electronic device and other devices.

The memory 1603 may include random access memory (RMD) or non-volatile memory (NM), such as, at least one disk storage device. In an embodiment, the memory 1603 may further be at least one storage device located remotely from the aforementioned processor 1601.

The aforementioned processor 1601 may be a general-purpose processor, including a central processing unit (CPU), a network processor (NP), and the like. It may further be a digital signal processor (DSP), an application-specific integrated circuit (ASIC), a field-programmable gate array (FPGA), or other programmable logic devices, discrete gates or transistor logic devices, or discrete hardware components.

The specific implementation of the electronic device in the present application is substantially the same as the embodiments of the method for determining the service type of the network traffic described above, which will not be repeated here.

Furthermore, the present application further proposes a computer-readable storage medium storing a program for determining the service type of the network traffic. When executed by a processor, the program for determining the service type of the network traffic implements steps of the method for determining the service type of the network traffic described above.

The specific implementation of the computer-readable storage medium in the present application is substantially the same as embodiments of the method for determining the service type of the network traffic described above, which will not be repeated here.

In the present application, terms "include", "comprise", or any other variations thereof are intended to cover non-exclusive inclusion. Thus, a process, a method, an article, or a system that includes a series of elements not only includes those elements, but also includes other elements that are not explicitly listed, or also includes elements inherent to the process, the method, the article, or the system. If there are no more restrictions, the element defined by the sentence "including a..." does not exclude the existence of other identical elements in the process, the method, the article, or the system that includes the element.

The sequence numbers of embodiments described above are merely descriptive and do not represent the advantages and disadvantages of the embodiments.

Through the above description of embodiments, those skilled in the art can clearly understand that methods of above embodiments can be implemented by means of software plus necessary general-purpose hardware platforms, and of course, they can further be implemented by hardware, but in many cases the former is a better implementation method. Based on this understanding, the technical solution of the present application, in essence, or the part that contributes to the related art, can be embodied in the form of a software product. This computer software product is stored in a storage medium (such as ROM/RAM, magnetic disk, optical disk) as described above, and includes several instructions to cause a terminal device (which may be a mobile phone, a computer, a server, or a network device, and the like.) to execute the methods described in various embodiments of the present application.

The above are only some embodiments of the present application, and do not limit the scope of the present application. Any equivalent structural or procedural transformations made using the specification and drawings of the present application, direct or indirect applications in other related technical fields, shall fall within the scope of the present application.

## Claims

1. A method for determining a service type of network traffic, **characterized by** comprising:
acquiring a quick user datagram protocol internet connections, abbreviated as QUIC, migration flow, and determining a first identification feature corresponding to the QUIC migration flow;
matching and acquiring a negotiation service type corresponding to the first identification feature from a metadata object, wherein the metadata object is generated based on a second identification feature and the negotiation service type matching the QUIC negotiation flow corresponding to the QUIC migration flow; and
configuring the negotiation service type as a migration service type corresponding to the QUIC migration flow.

2. The method for determining the service type of the network traffic according to claim 1, wherein the first identification feature is a migration connection identifier, abbreviated as CID, triplet, and the migration CID triplet at least comprises a migration CID;
the determining the first identification feature corresponding to the QUIC migration flow comprises:
determining the migration CID based on the QUIC migration flow; and
generating the migration CID triplet based on the migration CID;
wherein the metadata object is a negotiation CID triplet object, and the second identification feature is a negotiation CID triplet;
the matching and acquiring the negotiation service type corresponding to the first identification feature from the metadata object comprises:
matching and acquiring the negotiation service type corresponding to the negotiation CID triplet being the same as the migration CID triplet from the negotiation CID triplet object.

3. The method for determining the service type of the network traffic according to claim 2, wherein the determining the migration CID based on the QUIC migration flow comprises:
acquiring a migration quadruple from the QUIC migration flow;
determining a negotiation value corresponding to a negotiation quadruple being the same as the migration quadruple from the negotiation quadruple object corresponding to the QUIC negotiation flow, wherein the negotiation value is a negotiation length of the negotiation CID corresponding to the QUIC negotiation flow, and the negotiation length of the negotiation CID is the same as a migration length of the migration CID; and
extracting the migration CID from a first packet in the QUIC migration flow based on the migration length.

4. The method for determining the service type of the network traffic according to claim 2, wherein before the generating the migration CID triplet based on the migration CID, the method further comprises:
determining whether the migration CID is valid; and
in response to that the migration CID is valid, generating the migration CID triplet based on the migration CID.

5. The method for determining the service type of the network traffic according to claim 2, wherein the determining the migration CID based on the QUIC migration flow comprises:
acquiring a plurality of second packets in the QUIC migration flow;
extracting a longest common prefix code flow from the plurality of second packets; and
determining the migration CID based on the longest common prefix code flow.

6. The method for determining the service type of the network traffic according to claim 1, wherein the first identification feature is a migration network address triplet, and the determining the first identification feature corresponding to the QUIC migration flow comprises:
acquiring a migration quintuple from the QUIC migration flow; and
extracting a first portion content from the migration quintuple as the migration network address triplet, and the first portion content remaining unchanged before and after a connection migration;
wherein the metadata object is a negotiation network address triplet object; the second identification feature is a negotiation network address triplet; the matching and acquiring the negotiation service type corresponding to the first identification feature from the metadata object comprises:
matching and acquiring the negotiation service type corresponding to the negotiation network address triplet being the same as the migration network address triplet from the negotiation network address triplet object.

7. The method for determining the service type of the network traffic according to claim 1, further comprising:
inputting identification result information corresponding to the migration service type into an extended field of a tunnel header of a third packet; and
sending the third packet to an external system.

8. A method for determining a service type of network traffic, **characterized by** comprising:
acquiring a quick user datagram protocol internet connections, abbreviated as QUIC, negotiation flow;
determining a second identification feature corresponding to the QUIC negotiation flow, and determining a negotiation service type corresponding to the QUIC negotiation flow; and
generating a metadata object based on the second identification feature and the negotiation service type, wherein the metadata object is configured to determine a migration service type matching the QUIC migration flow corresponding to the QUIC negotiation flow.

9. The method for determining the service type of the network traffic according to claim 8, wherein the second identification feature is a negotiation connection identifier, abbreviated as CID, triplet, and the negotiation CID triplet at least comprises a negotiation CID; the determining the second identification feature corresponding to the QUIC negotiation flow comprises:
acquiring the negotiation CID from the QUIC negotiation flow; and
generating the negotiation CID triplet based on the negotiation CID;
wherein the metadata object is a negotiation CID triplet object, and the generating the metadata object based on the second identification feature and the negotiation service type comprises:
generating the negotiation CID triplet object based on the negotiation CID triplet and the negotiation service type, wherein the migration CID triplet is configured to match and acquire the negotiation service type corresponding to the negotiation CID triplet being the same as the migration CID triplet from the negotiation CID triplet object.

10. The method for determining the service type of the network traffic according to claim 9, further comprising:
acquiring a negotiation quadruple and a negotiation length of the negotiation CID from the QUIC negotiation flow; and
generating a negotiation quadruple object based on the negotiation length and the negotiation quadruple, wherein the negotiation quadruple object is configured to extract a migration CID from a first packet in the QUIC migration flow, and the migration CID is configured to generate the migration CID triplet.

11. The method for determining the service type of the network traffic according to claim 8, wherein the second identification feature is a negotiation network address triplet, and the determining the second identification feature corresponding to the QUIC negotiation flow comprises:
acquiring a negotiation quintuple from the QUIC negotiation flow; and
extracting a second portion content from the negotiation quintuple as the negotiation network address triplet, and the second portion content remaining unchanged before and after a connection migration;
wherein the metadata object is a negotiation network address triplet object, and the generating the metadata object based on the second identification feature and the negotiation service type comprises:
generating the negotiation network address triplet object based on the negotiation network address triplet and the negotiation service type.

12. An electronic device, **characterized by** comprising: a memory, a processor, and a program for determining a service type of network traffic stored on the memory and executable on the processor, wherein the program for determining the service type of the network traffic is configured to implement steps of the method for determining the service type of the network traffic according to any one of claims 1 to 11.

13. A computer-readable storage medium, **characterized by** storing a program for determining a service type of the network traffic, wherein when the program for determining the service type of the network traffic is executed by a processor, steps of the method for determining the service type of the network traffic according to any one of claims 1 to 11 are implemented.
